# EUROPEAN PATENT SPECIFICATION

(11) **EP 2 655 085 B1**
(45) Date of publication and mention of the grant of the patent: **31.10.2018**
(21) Application number: 11782248.6
(22) Date of filing: 07.11.2011
(51) Int. Cl.: B60B 3/14, B60B 3/16

(54) **A WHEEL, AN ADAPTER, A KIT OF PARTS AND A METHOD**
RAD, ADAPTER, TEILEKIT UND VERFAHREN
ROUE, ADAPTATEUR, ENSEMBLE DE PIÈCES ET PROCÉDÉ

(30) Priority: 22.12.2010 EP 10196660
(43) Date of publication of application: 30.10.2013
(73) Proprietor: Xinix Wheel Technology B.V., 9084 DP Goutum (NL)
(72) Inventor: SMEDING, Derk, Marcel, NL-9084 DP Goutum (NL)
(74) Representative: V.O.
(86) International application number: PCT/NL2011/050759
(87) International publication number: WO 2012/087117

(56) References cited:
- EP-A1- 2 239 151
- DE-A1- 3 307 055
- FR-A1- 2 569 617

## Description

The present invention relates to a wheel for a vehicle, comprising a central portion attachable to a vehicle hub and a rim arranged radially outside the central portion for supporting a wheel tire, wherein the central portion is provided with a series of cavities for receiving a corresponding adapter, wherein a cavity of the series of cavities has a through hole being aligned in an aligning direction with a through hole of a corresponding adapter for being traversed by a mounting element mounting the central portion to the vehicle hub.

International patent publication WO 02/074555 discloses such a wheel. Here, the wheel is mounted to the vehicle hub by inserting a bolt through the through hole of the adapter and the aligned through hole of the cavity into a screw aperture in the vehicle wheel. The through hole in the adapter is placed eccentric. Further, the adapter can rotate in the cavity of the wheel central portion, so that the distance between the adapter through hole and the wheel central axis, also called the pitch circle diameter, can be set. Advantageously, the wheel can be used for mounting to a variety of vehicle hubs having different pitch circle diameters.

Patent publication EP 2 239 151 discloses an insert and a rim receiving inserts. The rim is provided with longitudinal openings having a tapered rim. Further, patent publication DE 3307055 discloses a wheel according to the preamble of claim 1 and patent publication FR 2 569 617 discloses an adapter according to the preamble of claim 6. Each discloses a rim provided with openings receiving inserts that fit into each other at a multiple number of mutual rotational positions.

Although such a wheel enables adjusting the distance between the through hole in the adapter with respect to the central wheel axis, a number of disadvantages can be identified. The step of adjusting said distance complicates a process of mounting the wheel to a vehicle hub, making it generally too complex for an inexperienced person to perform the steps necessary for properly mounting the wheel. Further, the experienced person has to perform a multiple number of steps, thereby introducing a chance of making errors, e.g. in aligning the through holes of the adapter and the cavity properly, and making that the overall mounting process takes a relatively long time period. Also, during the mounting process or during transport of storage of the wheel, the rotatable adapter can be lost. In addition, the process of balancing the wheel is not accurate.

It is an object of the invention to obtain a wheel according to the preamble wherein at least one of the disadvantages is reduced. In particular, the invention aims at obtaining a wheel according to the preamble wherein the mounting process is simplified. Thereto, according to the invention, a wheel according to claim 1 is provided.

By providing a cavity geometry that receives the adapter in a unique rotation position, the adapter can be moved into the cavity in a single angular position only, so that the mounting process simplifies. Also an inexperienced person may mount the wheel to the vehicle hub. In addition, due to the simplified step of inserting the adapters, the process of mounting the wheel speeds up.

Further, by arranging an adapter having a two-body configuration such that the back side and the front side of the first body portion 25 are parallel, the force that is exerted by a bolt to the adapter can be transferred in a robust manner to the wheel, while on the other hand, an adapter solution is provided that can be applied in an existing wheel design. The parallel surface configuration of the first body portion also enables designing the axial dimensions of the adapter/bolt assembly such that the bolt does not protrude beyond the front surface of the wheel central portion. The invention is at least partly based on the insight that the pitch circle diameter can be set by selecting another adapter type, having a through hole that is located at another location in the adapter.

The invention also relates to an adapter according to claim 6.

Further, the invention relates to a kit of parts according to claim 12.

The invention also relates to a method according to claim 13.

Other advantageous embodiments according to the invention are described in the following claims.

By way of example only, embodiments of the present invention will now be described with reference to the accompanying figures in which
Fig. 1 shows a schematic cross section view of a wheel according to the invention;
Fig. 2A shows a schematic perspective front view of a central portion of a wheel shown in Fig. 1;
Fig. 2B shows a schematic perspective back view of a central portion of a wheel shown in Fig. 1;
Fig. 3A shows a schematic view of a first embodiment of an adapter according to the invention;
Fig. 3B shows a schematic view of a second embodiment of an adapter according to the invention;
Fig. 3C shows a schematic perspective front view of the adapter shown in Fig. 3B;
Fig. 3D shows a schematic perspective back view of the adapter shown in Fig. 3B;
Fig. 4A shows a schematic perspective front view of a further adapter according to the invention, and
Fig. 4B shows a schematic perspective back view of the adapter shown in Fig. 4A.

It is noted that the figures show merely preferred embodiments according to the invention. In the figures, the same reference numbers refer to equal or corresponding parts.

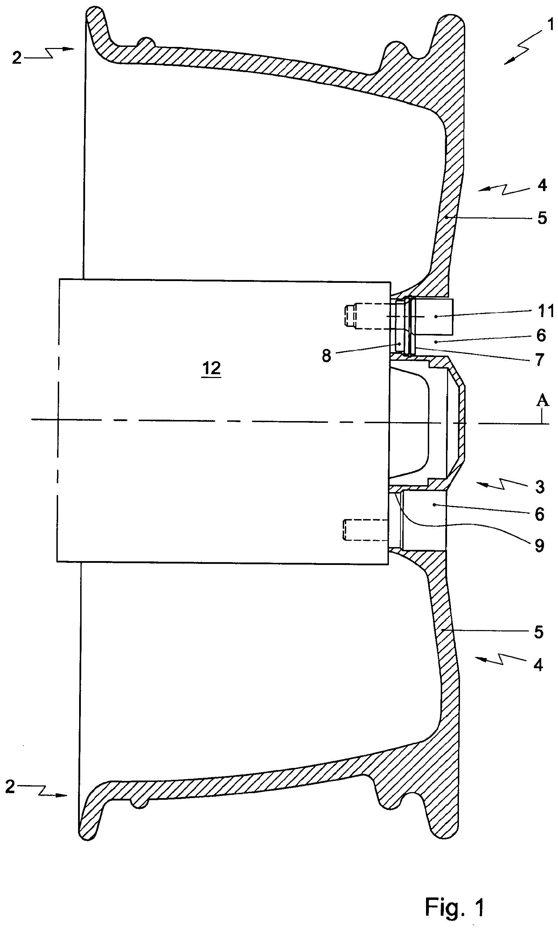

Figure 1 shows a schematic cross section view of a wheel 1 according to the invention. The wheel 1 comprises a central portion 3 and a rim 2. The central portion 3 is to be attached to a vehicle hub 12 having a central axis A. Further, the rim 2 is arranged radially outside the central portion 3 for supporting a wheel tire (not shown).

The wheel 1 also includes an intermediate portion 4 interconnecting the rim 2 to the central portion 3. The intermediate portion 4 can be formed by a plurality of spokes 5, as shown in Fig. 1. Alternatively, the intermediate portion 4 is formed by a ring shaped segment. Further, in principle, the central portion 3 can directly be connected to the rim 2.

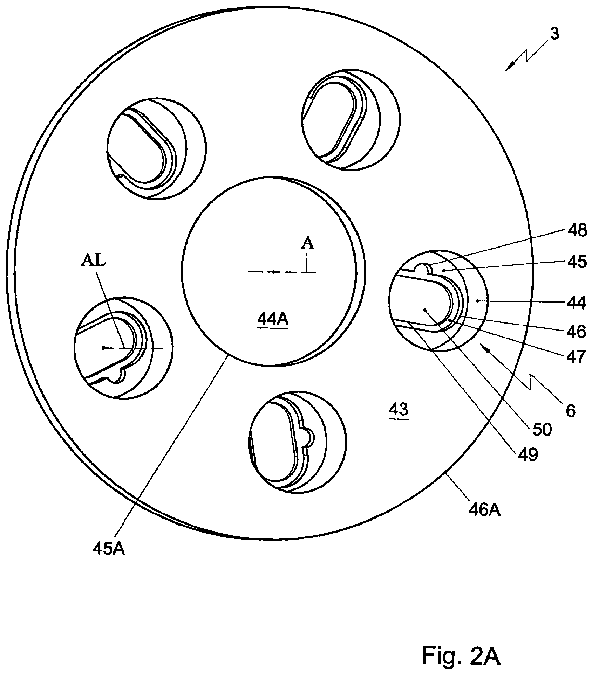

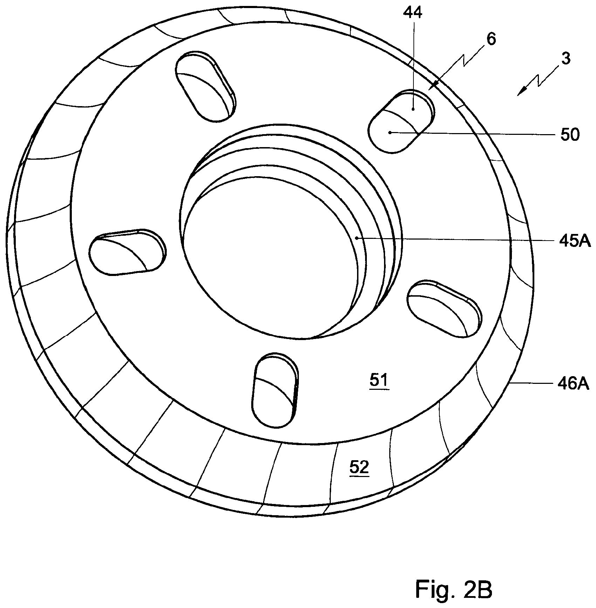

Figures 2A and 2B show schematic perspective front and back views, respectively, of the central portion 3 of the wheel 1 shown in Fig. 1. The central portion 3 is provided with a series of cavities 6 for receiving a corresponding adapter (not shown in Fig. 2A). In the shown embodiment, the cavities are arranged at a fixed radial distance with respect to the central axis A and distributed in a circumferential direction. Each cavity 6 has a through hole 50 that is aligned in an aligning direction AL parallel to the central axis A.

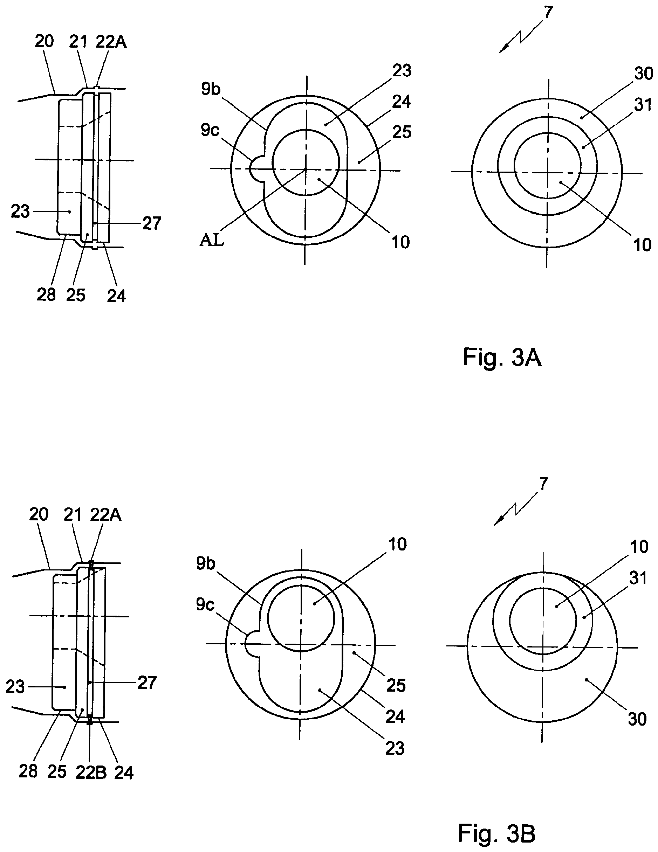

Figure 3A shows a schematic view of a first embodiment of an adapter 7 according to the invention. The adapter 7 is also provided with a through hole 10 that is aligned with the cavity through hole 50 when the adapter 7 is received in the cavity 6. The cavity geometry is arranged for receiving the corresponding adapter 7 in a unique rotational position with respect to the aligning direction AL. In a mounted state of the wheel 1, a mounting element traverses the adapter through hole 10 and the cavity through hole 50 for fixing the wheel 1 to the vehicle hub 12.

The central portion 3 is mainly formed as a ring having an inner rim 45A surrounding a central aperture 44A and having an outer rim 46A. In an alternative embodiment, the central portion has another shape, e.g. a disc. Further, the outer rim 46A can be formed otherwise, e.g. as a polygon. The shown central portion 3 has a generally flat structure having a front side surface 43 and a back side surface 51. The outer rim 46A includes a bevelled surface 52 at the back side. In principle, the central portion 3 may include curved portions, e.g. a portion at least partially surrounding the vehicle hub. Also, the aligning direction AL of the cavity through hole 50 and the adapter through hole 10 may intersect the central axis A. As an example, in principle, the aligning direction AL might be transverse with respect to the central axis, such that the mounting element traversing the through holes 10, 50 engages the vehicle hub 12 in a radial direction, transverse to the central axis A.

The cavity 6 includes a first volume and a second volume. The first volume is mainly shaped as a cylinder, preferably having a constant cross section and more preferably shaped as a disc, and is radially surrounded by first radial wall portion 21, 44, in the shown embodiment forming a circular contour. The first volume is axially bounded by a first receiving wall portion 45 receiving the adapter 7. The first receiving wall portion 45 extends mainly parallel to the front surface 43 of the central portion 3. The second cavity volume is also mainly shaped as a cylinder, preferably having a constant cross section. The second cavity volume extends from the first cavity volume in the aligning direction AL, towards the back side surface 51. The second cavity volume is radially surrounded by a second radial wall portion 46 forming a rotationally asymmetric contour. The second radial wall portion 46 includes a radially outwardly extending portion 48. Further, the second cavity volume is axially bounded by a second receiving wall portion 47 forming a recess in the first receiving wall portion 45. In the second receiving wall portion 47 of the cavity 6, the through hole 50 is formed being radially surrounded by a hole wall 49.

It is noted that, as an alternative, the second radial wall portion 46 includes a radially inwardly extending portion. Further, a multiple number of radially inwardly or outwardly extending portions can be applied.

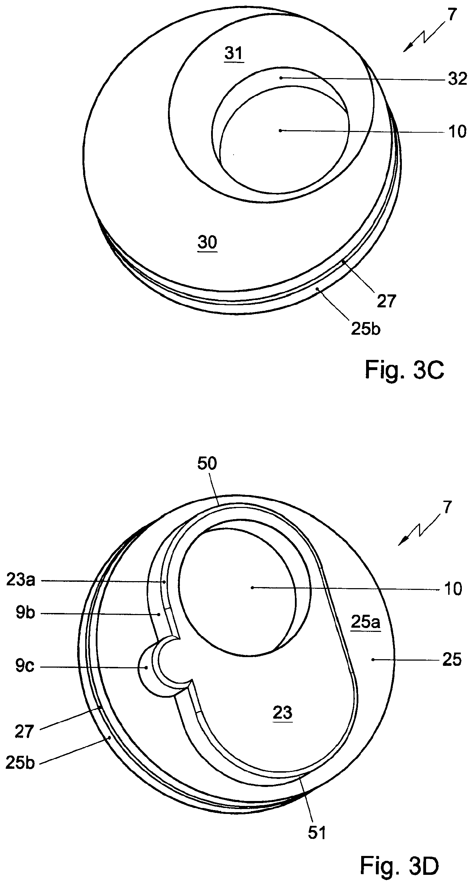

Figure 3B shows a schematic view of a second embodiment of an adapter according to the invention. Further, Figures 3C and 3D show a schematic perspective front view and back view, respectively, of the adapter 7 shown in Fig. 3B.

The adapter 7 in the first and second embodiment includes two body portions, both shaped as a cylinder, and matching the two volume geometry of the cavity 6. The first body portion is shaped as a disc 25 while the second body portion 23 has a rotationally asymmetric contour 9b, 28 matching the contour of the second radial wall portion 20, 46. Similarly, the contour of the second body portion 23 includes a radially outwardly extending section 9c. The first and the second body portions have each a substantially constant cross section and are preferably integrally formed. Further, the second body portion 23 extends axially from the first body portion 25 and is axially aligned therewith. The first body portion 25 has a front surface 30 and a back surface 25a extending toward the radial outer periphery 25b of the first body portion 25. The front surface 30 and the back surface 25a are mainly parallel. Further, the second body portion 23 is located radially within the periphery 25b of the disc 25. The adapter further includes a through hole 10 formed inside the first and second body portion 23, 25. The aligning orientation AL of the adapter through hole 10 is parallel with the longitudinal axis of the first and second cylinder. The through hole 10 is surrounded by an adapter inner wall 32. At the front side of the first body 25, the front surface 30 includes a bevelled section 31 for receiving a head portion of the mounting element extending through the through holes 10, 50.

By arranging an adapter having a two-body configuration such that the back side 25a and the front side 30 of the first body portion 25 are parallel, the force that is exerted by a bolt to the adapter can be transferred in a robust manner to the wheel.

By matching the geometry of the cavity 6 to the geometry of the corresponding adapter 7, the adapter can be fixed in a unique rotation position with respect to the aligning direction AL. A wall segment of the cavity, e.g. the second radial wall portion 46, is arranged for blocking the received adapter against rotational movement. The adapter fits only in the cavity when rotated over a single or a multiple times of 360°. In an axial view, the wall segment 46 encloses a substantially elongated area, such as a rectangle having rounded corners, or an ellipse. Further, the wall segment might enclose an irregular formed area.

When the adapter 7 is received in the corresponding cavity 6, the two adapter body portions abut against the first receiving wall portion 45 and the second receiving wall portion 47.

The dimensions of the cavity through hole 50 are larger than the dimensions of the adapter through hole 10. Therefore, the position of the adapter through hole 10 may vary while the mounting element may still traverse both through holes 10, 50.

Figures 3A and 3B shows at the right hand side a front view, in the middle a back view of the adapter, respectively, and on the left hand side a cross sectional side view of the adapter being received in the cavity. In the shown embodiment, the radial outer periphery 9b of the second body portion 23 has a generally elongated shape with rounded ends 50, 51. Here, the radial outer periphery 9b of the second body portion 23 includes a radially outwardly extending portion 9c provided on a bi-symmetric elongated shape contour 9b. By supplementing the bi-symmetric contour 9b with a radially outwardly or inwardly extending portion 9c, a rotationally asymmetric contour is obtained, so that the adapter fits in the cavity of the wheel in only one unique rotational position.

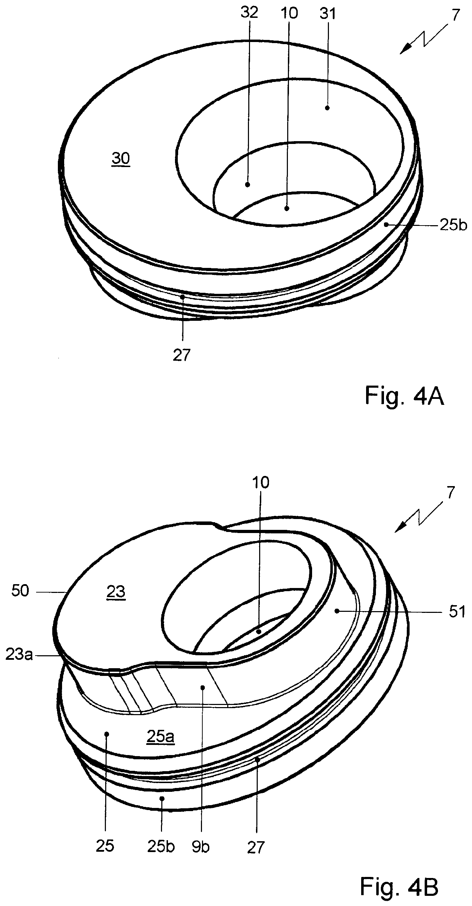

Figures 4A and 4B show schematic perspective views of a further adapter 7 according to the invention, from the front and the back side, respectively. Also in the embodiment shown in Fig. 4A and 4B, the radial outer periphery of the second body portion has a generally elongated shape with rounded ends. The radius of curvature at a first rounded end is different from the radius of curvature at a second rounded end. Therefore, a first end has the shape of a semi-circle having a first radius curvature, while a second end has also the shape of a semi-circle having a second radius curvature.

According to an aspect of the invention, a multiple number of adapters is provided having different through hole positions forming a kit of parts. In the embodiment shown in Fig. 3A, the through hole 10 is located somewhere in the centre of the adapter, while in the embodiment shown in Fig. 3B, the through hole 10 is located in a more eccentric position, in the shown embodiment in the longitudinal direction of the second body portion 23. By selecting an adapter having the through hole at a specific location, the distance between the through hole and the central axis A, the pitch circle diameter can be set.

As an example, in case of a vehicle hub having a diameter of 143 mm, a pitch circle diameter can be set of 98, 100, 105, 108, 110, 112, 114.3, 118 or 120 mm. Similarly, in case of a vehicle hub having a diameter of 152 mm, a pitch circle diameter can be set of 118, 120, 127 or 130 mm. Further, appropriate bolt diameters can be selected, e.g. in a range of 20-23 mm.

In this context it is noted that a central pitch circle of the adapter can be appropriately chosen to enable standard pitch circles. As an example, the central pitch circle of the adapter can be chosen as 104 or 109 mm.

Such a kit of parts might includes two, three, four, five or more adapters having different hole positions and forming a set of adapters. The kit might include a multiple number of sets of adapters, the multiple number corresponding to the number of cavities in the wheel. Further, the kit might includes four times the multiple number of sets of adapters, so that four wheels can be prepared for mounting to a vehicle. In the example of five cavities in the wheel, twenty sets of adapters are needed for mounting the wheels. Further, the set of adapters might include a single adapter, so that for each cavity one adapter is available in the kit of adapters. Also, a single or a multiple number of spare adapters might be included in the kit of parts. In addition the kit of parts might include a wheel and a set of adapters that can be received in the cavities of the wheel.

According to an aspect of the invention, adapters having the hole at an identical location can be provided with means for recognizing them as such, e.g. by providing them with an identification colour.

Advantageously, the radial outer periphery 24 of the first body portion 25 is provided with a groove 27 extending in a circumferential direction for receiving a locking ring 22B for locking the adapter in the aligning direction AL. Accordingly, the first radial wall portion 44, 21 of the cavity 6 includes a corresponding groove 22A, as shown in Fig. 3A and 3B. By axially locking the adapter 7, it is counteracted that the adapter unintentionally leaves the wheel 1. Further, since the adapter is fixed, the wheel balancing process can be performed accurately. The locking mechanism can be released by pressing the adapter from the cavity outwardly, thereby enabling re-use of the wheel.

Preferably, at least one edge between a radial wall portion and a receiving wall portion is bevelled to enhance transfer of contact forces between the adapter 7 and the central portion 3. Accordingly, such a bevelled edge corresponds to a bevelled edge of the adapter 7. As an example, Fig. 3D shows a bevelled surface 23A arranged between an end face of the second body portion 23 and a side contour 9b radially surrounding the second body portion 23.

Further, the first radial wall portion 44 and the second radial wall portion 46 can be tapered to facilitate a step of inserting the adapter in the corresponding cavity.

According to an aspect of the invention, there is provided a method for preparing a wheel for attachment to a vehicle hub. The method includes the steps of providing a wheel for a vehicle, comprising a central portion attachable to a vehicle hub and a rim arranged radially outside the central portion for supporting a wheel tire, wherein the central portion is provided with a series of cavities for receiving a corresponding adapter, wherein a cavity of the series of cavities has a through hole having an alignment direction, providing an adapter having a through hole, wherein the adapter has a geometry arranging the adapter for being received in a corresponding cavity in a unique rotational position with respect to the aligning direction, and moving the adapter into the corresponding cavity along the alignment direction.

It will be understood that the above described embodiments of the invention are exemplary only and that other embodiments are possible without departing from the scope of the present invention as defined in the following claims. It will be understood that many variants are possible.

As an example, the through hole of the cavity can be provided with the same contour as the second radial wall portion surrounding the second body portion of the adapter. Further, the adapter can be provided with a single cylindrical body portion having a rotationally asymmetric contour so that the adapter is received in a unique rotation position with respect to the aligning direction.

The adapter can in principle be made from any metal or plastic, e.g. from so called "automaten" steel, preferably electrolytically galvanized to counteract corrosion.

Such variants will be apparent to the person skilled in the art and are considered to fall within the scope of the invention as defined in the following claims.

## Claims

1. A wheel (1) for a vehicle, comprising a central portion (3) attachable to a vehicle hub and a rim (2) arranged radially outside the central portion for supporting a wheel tire, wherein the central portion (3) is provided with a series of cavities (6) for receiving a corresponding adapter (7), wherein a cavity of the series of cavities has a through hole (50) being aligned in an aligning direction (AL) with a through hole of a corresponding adapter for being traversed by a mounting element mounting the central portion (3) to the vehicle hub, wherein the cavity includes two cylindrically shaped and axially aligned volumes, wherein the second volume extends from the first volume towards a back side surface (51) of the central portion, and wherein the second volume is located radially within the radial outer periphery of the first volume, **characterized in that** the cavity geometry is arranged for receiving the corresponding adapter in a unique rotational position with respect to the aligning direction, and **in that** the first volume is bounded by a first receiving wall portion (45) extending substantially parallel to the front surface (43) of the central portion (3).

2. A wheel according to claim 1, wherein the wall defining the cavity includes a wall segment being arranged for blocking the corresponding adapter against rotational movement.

3. A wheel according to any of the preceding claims, wherein the wall segment has a rotationally asymmetric contour.

4. A wheel according to any of the preceding claims, wherein the wall segment encloses a substantially elongated area.

5. A wheel according to any of the preceding claims, wherein the dimensions of the cavity through hole are larger than the dimensions of the adapter through hole.

6. An adapter for being received in a cavity of a series of cavities provided in a central portion of a vehicle wheel, the adapter having a through hole for aligning in an aligning direction with a through hole provided in a corresponding cavity for being traversed by a mounting element mounting the central portion to a vehicle hub, wherein the adapter has a geometry arranging the adapter for being received in the corresponding cavity in a unique rotational position with respect to the aligning direction, wherein the adapter includes two cylindrically shaped and axially aligned body portions, wherein the first body portion includes a front surface and a back surface being substantially parallel to the front surface and extending towards the radial outer periphery of the first body portion, and wherein the second body portion is located radially within the radial outer periphery of the first body portion, **characterized in that** the second body portion has a rotationally asymmetric contour.

7. An adapter according to claim 6, wherein the first body portion is shaped as a disc.

8. An adapter according to any of the preceding claims 6-7, wherein the radial outer periphery of the second body portion has a generally elongated shape with rounded ends.

9. An adapter according to claim 8, wherein the radius of curvature at a first rounded end is different from the radius of curvature at a second rounded end.

10. An adapter according to claim 8, wherein the radial outer periphery of the second body portion includes a radially inwardly or outwardly extending portion provided on a bi-symmetric elongated shape contour.

11. An adapter according to any of the preceding claims 6-10, further including a groove extending circumferentially in the radial outer periphery of the first body portion, and a locking ring received in the groove.

12. A kit of parts, including a multiple number of adapters according to claim 6 for being received in cavities of a series of cavities provided in a central portion of a vehicle wheel.

13. A method for preparing a wheel for attachment to a vehicle hub, comprising:
- providing a wheel for a vehicle, comprising a central portion attachable to a vehicle hub and a rim arranged radially outside the central portion for supporting a wheel tire, wherein the central portion is provided with a series of cavities for receiving a corresponding adapter, wherein a cavity of the series of cavities has a through hole having an alignment direction, and wherein the cavity geometry is arranged for receiving the corresponding adapter in a unique rotational position with respect to the aligning direction;
- providing an adapter having a through hole, wherein the adapter has a geometry arranging the adapter for being received in a corresponding cavity in a unique rotational position with respect to the aligning direction, wherein the adapter includes two cylindrically shaped and axially aligned body portions, wherein the first body portion includes a front surface and a back surface being substantially parallel to the front surface and extending towards the radial outer periphery of the first body portion, and wherein the second body portion is located radially within the radial outer periphery of the first body portion, and
- moving the adapter into the corresponding cavity along the alignment direction in the unique rotational position.

## Patentansprüche

1. Rad (1) für ein Fahrzeug, umfassend einen mittleren Teil (3), zu befestigen an einer Fahrzeugnabe und einer Felge (2), angeordnet radial außerhalb des mittleren Teils zum Stützen eines Radreifens, wobei der mittlere Teil (3) versehen ist mit einer Reihe von Hohlräumen (6) zur Aufnahme eines entsprechenden Adapters (7), wobei ein Hohlraum der Reihe von Hohlräumen ein Durchgangsloch (50) hat, ausgerichtet in einer Ausrichtungsrichtung (AL) mit einer Durchgangsrichtung eines entsprechenden Adapters, um von einem Montageelement des mittleren Teils (3) zu der Fahrzeugnabe durchquert zu werden, wobei der Hohlraum zwei zylindrisch geformte und axial ausgerichtete Volumen umfasst, wobei das zweite Volumen von dem ersten Volumen zu einer rückwärtigen Oberfläche (51) des mittleren Teils verläuft und wobei das zweite Volumen sich radial innerhalb des radialen Außenumfangs des ersten Volumens befindet, **dadurch gekennzeichnet, dass** die Hohlraumgeometrie angeordnet ist zur Aufnahme des entsprechenden Adapters in einer eindeutigen Drehposition in Bezug auf die Ausrichtungsrichtung und dass das erste Volumen begrenzt wird von einem ersten aufnehmenden Wandteil (45), verlaufend im Wesentlichen parallel zu der vorderen Oberfläche (43) des mittleren Teils (3).

2. Rad nach Anspruch 1, wobei die Wand, die den Hohlraum definiert, ein Wandsegment umfasst, das angeordnet ist zum Blockieren des entsprechenden Adapters gegen Drehbewegung.

3. Rad nach einem der vorhergehenden Ansprüche, wobei das Wandsegment eine drehend asymmetrische Kontur hat.

4. Rad nach einem der vorhergehenden Ansprüche, wobei das Wandsegment einen im Wesentlichen länglichen Bereich umschließt.

5. Rad nach einem der vorhergehenden Ansprüche, wobei die Abmessungen des Hohlraumdurchgangslochs größer sind als die Abmessungen des Adapterdurchgangslochs.

6. Adapter zur Aufnahme in einem Hohlraum einer Reihe von Hohlräumen, bereitgestellt in einem mittleren Teil eines Fahrzeugrades, welcher Adapter ein Durchgangsloch hat zum Ausrichten in einer Ausrichtungsrichtung mit einem Durchgangsloch, bereitgestellt in einem entsprechenden Hohlraum, um von einem Montageelement, das den mittleren Teil an eine Fahrzeugnabe montiert, durchquert zu werden, wobei der Adapter eine Geometrie hat, die den Adapter anordnet, um in dem entsprechenden Hohlraum in einer eindeutigen Drehposition in Bezug auf die Ausrichtungsrichtung aufgenommen zu werden, wobei der Adapter zwei zylindrisch geformte und axial ausgerichtete Körperteile umfasst, wobei der erste Körperteil eine vordere Oberfläche und eine rückwärtige Oberfläche, die im Wesentlichen parallel zu der vorderen Oberfläche ist und zu dem radialen Außenumfang des ersten Körperteils hin verläuft, umfasst und wobei der zweite Körperteil sich radial innerhalb des radialen Außenumfangs des ersten Körperteils befindet, **dadurch gekennzeichnet, dass** der zweite Körperteil eine drehend asymmetrische Kontur hat.

7. Adapter nach Anspruch 6, wobei der erste Körperteil als eine Scheibe geformt ist.

8. Adapter nach einem der vorhergehenden Ansprüche 6-7, wobei der radiale Außenumfang des zweiten Körperteils eine allgemein längliche Form mit gerundeten Enden hat.

9. Adapter nach Anspruch 8, wobei der Krümmungsradius an einem ersten gerundeten Ende sich von dem Krümmungsradius an einem zweiten gerundeten Ende unterscheidet.

10. Adapter nach Anspruch 8, wobei der radiale Außenumfang des zweiten Körperteils einen radial einwärts oder auswärts verlaufenden Teil, bereitgestellt auf einer bisymmetrisch länglichen Formkontur, umfasst.

11. Adapter nach einem der vorhergehenden Ansprüche 6-10, ferner umfassend eine Rille, verlaufend umlaufend in dem radialen Außenumfang des ersten Körperteils, und einen Sicherungsring, aufgenommen in der Rille.

12. Kit von Teilen, umfassend eine Vielzahl von Adaptern nach Anspruch 6 zur Aufnahme in Hohlräumen einer Reihe von Hohlräumen, bereitgestellt in einem mittleren Teil eines Fahrzeugrades.

13. Verfahren zur Herstellung eines Rades zur Befestigung an einer Fahrzeugnabe, umfassend:
- das Bereitstellen eines Rades für ein Fahrzeug, umfassend einen mittleren Teil, zu befestigen an einer Fahrzeugnabe und einer Felge, angeordnet radial außerhalb des mittleren Teils zum Stützen eines Radreifens, wobei der mittlere Teil versehen ist mit einer Reihe von Hohlräumen zur Aufnahme eines entsprechenden Adapters, wobei ein Hohlraum der Reihe von Hohlräumen ein Durchgangsloch mit einer Ausrichtungsrichtung hat und wobei die Hohlraumgeometrie angeordnet ist zur Aufnahme des entsprechenden Adapters in einer eindeutigen Drehposition in Bezug auf die Aufnahmerichtung;
- das Bereitstellen eines Adapters mit einem Durchgangsloch, wobei der Adapter eine Geometrie hat, die den Adapter anordnet, in einem entsprechenden Hohlraum in einer eindeutigen Drehposition in Bezug auf die Ausrichtungsrichtung aufgenommen zu werden, wobei der Adapter zwei zylindrisch geformte und axial ausgerichtete Körperteile umfasst, wobei der erste Körperteil eine vordere Oberfläche und eine rückwärtige Oberfläche, die im Wesentlichen parallel zu der vorderen Oberfläche ist und zu dem radialen Außenumfang des ersten Körperteils hin verläuft, umfasst und wobei der zweite Körperteil sich radial innerhalb de radialen Außenumfangs des ersten Körperteils befindet, und
- das Bereitstellen des Adapters in den entsprechenden Hohlraum entlang der Ausrichtungsrichtung in die eindeutige Drehposition.

## Revendications

1. Roue (1) pour véhicule, comportant une partie centrale (3) pouvant se fixer sur un moyeu de véhicule et une jante (2) disposée radialement à l'extérieur de la partie centrale pour supporter un pneumatique de roue, la partie centrale (3) étant pourvue d'une série de cavités (6) destinées à recevoir un adaptateur correspondant (7), une cavité parmi la série de cavités ayant un trou traversant (50) aligné dans une direction d'alignement (AL) avec un trou traversant d'un adaptateur correspondant pour être traversé par un élément de montage servant à monter la partie centrale (3) sur le moyeu de véhicule, la cavité comprenant deux volumes de forme cylindrique alignés axialement, le second volume s'étendant depuis le premier volume vers une surface (51) de face arrière de la partie centrale, et le second volume étant situé radialement dans le pourtour extérieur radial du premier volume, **caractérisée en ce que** la géométrie de la cavité est conçue pour loger d'adaptateur correspondant dans une position de rotation exclusive par rapport à la direction d'alignement, et **en ce que** le premier volume est délimité par une première partie formant paroi réceptrice (45) s'étendant sensiblement parallèlement à la surface avant (43) de la partie centrale (3).

2. Roue selon la revendication 1, dans laquelle la paroi définissant la cavité comprend un segment de paroi conçu pour empêcher tout mouvement de rotation de l'adaptateur correspondant..

3. Roue selon l'une quelconque des revendications précédentes, dans laquelle le segment de paroi a un profil asymétrique en rotation.

4. Roue selon l'une quelconque des revendications précédentes, dans laquelle le segment de paroi englobe une zone sensiblement allongée.

5. Roue selon l'une quelconque des revendications précédentes, dans laquelle les dimensions du trou traversant de la cavité sont plus grandes que les dimensions du trou traversant de l'adaptateur.

6. Adaptateur destiné à être logé dans une cavité parmi une série de cavités ménagées dans une partie centrale d'une roue de véhicule, l'adaptateur ayant un trou traversant destiné à s'aligner dans une direction d'alignement avec un trou traversant ménagé dans une cavité correspondante pour être traversé par un élément de montage servant à monter la partie centrale (3) sur le moyeu de véhicule, l'adaptateur ayant une géométrie conçue afin que l'adaptateur soit logé dans la cavité correspondante dans une position de rotation exclusive par rapport à la direction d'alignement, l'adaptateur comportant deux parties de corps de forme cylindrique alignées axialement, la première partie de corps comprenant une surface avant et une surface arrière sensiblement parallèle à la surface avant et s'étendant vers le pourtour extérieur radial de la première partie de corps, et la seconde partie de corps étant située radialement dans le pourtour extérieur radial de la première partie de corps, **caractérisé en ce que** la seconde partie de corps a un profil asymétrique en rotation.

7. Adaptateur selon la revendication 6, dans lequel la première partie de corps a la forme d'un disque.

8. Adaptateur selon l'une quelconque des revendications précédentes 6 et 7, dans lequel le pourtour extérieur radial de la seconde partie de corps a une forme globalement allongée avec des extrémités arrondies.

9. Adaptateur selon la revendication 8, dans lequel le rayon de courbure à une première extrémité arrondie est différent du rayon de courbure à une seconde extrémité arrondie.

10. Adaptateur selon la revendication 8, dans lequel le pourtour extérieur radial de la seconde partie de corps comprend une partie s'étendant radialement vers l'intérieur ou vers l'extérieur, présente sur un profil de forme allongée bisymétrique.

11. Adaptateur selon l'une quelconque des revendications précédentes 6 à 10, comportant en outre une gorge s'étendant dans la direction circonférentielle dans le pourtour extérieur radial de la première partie de corps, et une bague de verrouillage logée dans la gorge.

12. Ensemble de pièces, comportant une pluralité d'adaptateurs selon la revendication 6 destinés à être logés dans des cavités d'une série de cavités ménagées dans une partie centrale d'une roue de véhicule.

13. Procédé pour préparer une roue en vue de sa fixation sur un moyeu de véhicule, comportant :
- la réalisation d'une roue pour véhicule, comportant une partie centrale pouvant se fixer sur un moyeu de véhicule et une jante disposée radialement à l'extérieur de la partie centrale pour supporter un pneumatique de roue, la partie centrale étant pourvue d'une série de cavités destinées à recevoir un adaptateur correspondant, une cavité parmi la série de cavités possédant une direction d'alignement, et la géométrie de la cavité étant conçue pour loger d'adaptateur correspondant dans une position de rotation exclusive par rapport à la direction d'alignement ;
- la réalisation d'un adaptateur ayant un trou traversant, l'adaptateur ayant une géométrie conçue afin que l'adaptateur soit logé dans une cavité correspondante dans une position de rotation exclusive par rapport à la direction d'alignement, l'adaptateur comportant deux parties de corps de forme cylindrique alignées axialement, la première partie de corps comprenant une surface avant et une surface arrière sensiblement parallèle à la surface avant et s'étendant vers le pourtour extérieur radial de la première partie de corps, et la seconde partie de corps étant située radialement dans le pourtour extérieur radial de la première partie de corps, et .
- l'introduction de l'adaptateur dans la cavité correspondante par un mouvement dans la direction d'alignement dans la position de rotation exclusive.
